# EUROPEAN PATENT APPLICATION

(11) **EP 4 481 455 A1**
(43) Date of publication of application: **25.12.2024**
(21) Application number: 24182604.9
(22) Date of filing: 17.06.2024
(51) Int. Cl.: G02B 6/44

(54) **OPTICAL FIBER CABLE ACCUMULATORS AND ASSEMBLIES**

(30) Priority: 20.06.2023 US 202363522018 P
(71) Applicant: Corning Research and Development Corporation, Corning, NY 14831 (US)
(72) Inventor: BICKHAM, Scott, New York, 14830 (US); HEMPSTEAD, Martin, New York, 14870 (US); SCANNELL, Garth, New York, 14830 (US)
(74) Representative: Elkington and Fife LLP

(57) **Abstract**

Disclosed herein are fiber optic cable accumulators including a base and a perimeter wall extending from the base. The perimeter wall defines a cavity and a plurality of openings providing ingress and egress pathways into the cavity. At least one mandrel extends from the base within the cavity and is disposed equidistant from at least two opposite portions of the perimeter wall.

## Description

### PRIORITY APPLICATIONS

This application claims the benefit of priority of U. S. Provisional Application Serial No. 63/522,018, filed on June 20, 2023, the content of which is relied upon and incorporated herein by reference in its entirety.

### TECHNICAL FIELD

The present specification generally relates to cable routing and, more specifically, to optical fiber cable accumulators and assemblies for managing cable slack.

### BACKGROUND

In fiber optic networks, fiber optic cables may be connected to various fiber optic assemblies (e.g., hardware, housings, enclosures, etc.). The fiber optic cables may include slack in addition to the cabling needed to make optical connections. This slack may enable the cable to be routed in the fiber optic assembly and/or enable removal of a portion of the cable from the fiber optic assembly, such as to facilitate optical connections (e.g., splicing and patching). Additionally, the slack may be used to facilitate repairs or reconfigurations in which a portion of the cable may be discarded. The slack may be stored inside the fiber optic assembly in one or more cable management solutions.

Various solutions for cable management and overlength management are available on the market. In most cases, a tray approach is used, which can be arranged and stacked inside the device. Routing functionalities and overlength-management may be realized by manual winding of single fibers around a fixed integrated support structure. However, the winding of fibers in this tray approach may result in high bend stresses which may lead to product failure. The tray approach is also limited in that several types of trays may need to be provided to provide specific routing directions. That is there may be a plurality of heterogeneous trays which may only fit together in certain ways like a jigsaw puzzle. This may cause it to be frustrating and time-consuming to properly assemble the various trays which may be needed for cable management. In some co-packaged optical solutions, including high-density small-form-factor switch deployments, cable management is performed by a "fiber shuffle." However, these fiber shuffles may be highly sophisticated and specific to the switch design resulting in a low-volume price penalty and limiting serviceability. One fiber shuffle may connect to multiple input and output connections including multiple active alignment coupling processes. If a coupling fails, the entire fiber shuffle may require replacement.

### SUMMARY

Embodiments of the present disclosure are directed to accumulators and assemblies which reduce the probability of failure due to bend stress in one or more fiber optic cables which may be routed through the accumulators and assemblies. Moreover, the accumulators described herein are provided with a symmetric configuration to reduce the number of SKUs which may be needed in any given assembly.

In one embodiment, a fiber optic cable accumulator includes a base; a perimeter wall extending from the base and defining: a cavity; and a plurality of openings providing ingress and egress pathways into the cavity; and at least one mandrel extending from the base within the cavity and disposed equidistant from at least two opposite portions of the perimeter wall.

In another embodiment, a fiber optic assembly includes a housing base; an opto-electronic device supported by the housing base; one or more fiber optic adapters supported by the housing base; at least one optical fiber optically connecting the one or more fiber optic adapters to the opto-electronic device; and at least one fiber optic cable accumulator supported by the housing base, the at least one fiber optic cable accumulator configured to route at least a portion of the at least one optical fiber from the one or more fiber optic adapters to the opto-electronic device, the at least one fiber optic cable accumulator comprising: a base; a perimeter wall extending from the base and defining: a cavity; and a plurality of openings providing ingress and egress pathways into the cavity; and at least one mandrel extending from the base within the cavity and disposed equidistant from at least two opposite portions of the perimeter wall.

In yet another embodiment, a fiber optic cable accumulator includes a base; a perimeter wall extending from the base and defining: a cavity; and a plurality of openings providing ingress and egress pathways into the cavity; and at least one mandrel extending from the base within the cavity and disposed equidistant from at least two opposite portions of the perimeter wall; and at least one optical fiber at least partially stored within the cavity, the at least one optical fiber configured to optically connect one or more fiber optic adapters to an opto-electronic device.

These and additional features provided by the embodiments described herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a diagram of an exemplary fiber network, according to one or more embodiments shown and described herein;
FIG. 2 schematically depicts a perspective view of an example fiber optic cable accumulator, according to one or more embodiments shown and described herein;
FIG. 3 schematically depicts a top view of another example fiber optic cable accumulator, according to one or more embodiments shown and described herein;
FIG. 4 schematically depicts a top view of yet another example fiber optic cable accumulator, according to one or more embodiments shown and described herein;
FIG. 5 schematically depicts a side cross-sectional view of a mandrel of the fiber optic cable accumulator of FIG. 3 and FIG. 4, according to one or more embodiments shown and described herein;
FIG. 6 schematically depicts the example fiber optic cable accumulator of FIG. 4 including one example configuration of one or more optical fibers routed within a cavity of the fiber optic accumulator, according to one or more embodiments shown and described herein;
FIG. 7 schematically depicts the example fiber optic cable accumulator of FIG. 4 including another example configuration of one or more optical fibers routed within a cavity of the fiber optic accumulator, according to one or more embodiments shown and described herein;
FIG. 8 schematically depicts the example fiber optic cable accumulator of FIG. 4 including yet another example configuration of one or more optical fibers routed within a cavity of the fiber optic accumulator, according to one or more embodiments shown and described herein;
FIG. 9 schematically depicts a top view of a plurality of the example fiber optic cable accumulators of FIG. 4 arranged in a side-by-side configuration, according to one or more embodiments shown and described herein;
FIG. 10 schematically depicts a perspective view of a plurality of the example fiber optic cable accumulators of FIG. 4 arranged in a vertical configuration within a fiber optic assembly, according to one or more embodiments shown and described herein; and
FIG. 11 depicts a plot of predicted failure probabilities as a function of different mandrel radii, according to one or more embodiments shown and described herein.

### DETAILED DESCRIPTION

Embodiments described herein are directed to high-reliability fiber optic cable accumulators and assemblies that in some embodiments include a symmetric design that equalizes slack storage from ingress and egress directions, allows use of the same accumulator in mirror-image fiber deployments and simplifies the challenge of routing fiber optic cables or ribbons through a heterogeneous block of accumulators that may be assembled like a jigsaw puzzle. Moreover, the accumulators of the present disclosure ensure proper cable routing while reducing the failure probability due to bend stress in the cable assembly and further minimize the number of cable assembly SKUs required within an assembly.

Fiber optic cable accumulators as provided herein generally include a base, a plurality of walls which together define a perimeter wall extending from the base, a cavity defined within the perimeter wall, a plurality of openings providing ingress and egress pathways or channels into the cavity, and at least one mandrel extending from the base within the cavity. The fiber optic cable accumulators described herein provide a solution for cable management and overlength management within various fiber optic assemblies (e.g., hardware, housings, enclosures, etc.). Thus, the fiber optic cable accumulators of the disclosure are configured to store fiber optic cable slack or loops of slack, and this slack may enable the fiber optic cables to be routed in the fiber optic assembly and/or enable removal of a portion of the fiber optic cable from the fiber optic assembly, such as to facilitate optical connections (e.g., splicing and patching). Additionally, slack storage can be used to accommodate manufacturing variations in cable lengths, which allows for deterministic routing of fiber and cable outside the accumulator. Various embodiments of the fiber optic accumulator, assemblies including an accumulator, and use of the fiber optic accumulator are described in more detail herein. Whenever possible, the same reference numerals will be used throughout the drawings to refer to the same or like parts.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

Optical fibers are useful in a wide variety of applications, including the telecommunications industry for voice, video, and data transmissions. The benefits of optical fiber are well known and include higher signal-to-noise ratios and increased bandwidth compared to conventional copper-based transmission technologies. To meet modern demands for increased bandwidth and improved performance, telecommunication networks are increasingly providing optical fiber connectivity closer to end subscribers. These initiatives include fiber-to-the-node (FTTN), fiber-to-the-premises (FTTP), fiber-to-the-home (FTTH), and the like (generally described as FTTx).

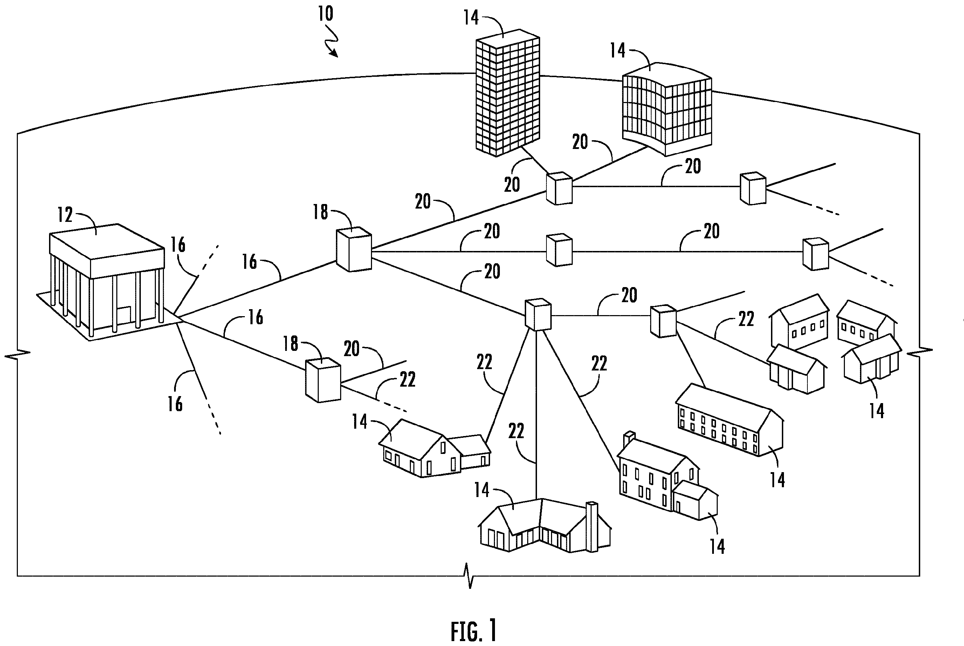

In an FTTx network, fiber optic cables are used to carry optical signals to various distribution points and, in some cases, all the way to end subscribers. For example, FIG. 1 is a schematic diagram of an exemplary FTTx network 10 that distributes optical signals generated at a switching point 12 (e.g., a central office of a network provider) to subscriber premises 14. Optical line terminals (OLTs; not shown) at the switching point 12 convert electrical signals to optical signals. Fiber optic feeder cables 16 then carry the optical signals to various local convergence points 18, which act as locations for splicing and making cross-connections and interconnections. The local convergence points 18 often include splitters to enable any given optical fiber in the fiber optic feeder cable 16 to serve multiple subscriber premises 14. As a result, the optical signals are "branched out" from the optical fibers of the fiber optic feeder cables 16 to optical fibers of distribution cables 20 that exit the local convergence points 18.

At network access points closer to the subscriber premises 14, some or all of the optical fibers in the distribution cables 20 may be accessed to connect to one or more subscriber premises 14. Drop cables 22 extend from the network access points to the subscriber premises 14, which may be single-dwelling units (SDU), multi-dwelling units (MDU), businesses, and/or other facilities or buildings. A SDU or MDU terminal may be disposed at the subscriber premises 14. A conversion of optical signals back to electrical signals may occur at the network access points or at the subscriber premises 14.

There are many different network architectures, and the various tasks required to distribute optical signals (e.g., splitting, splicing, routing, connecting subscribers) can occur at several locations. Regardless of whether a location is considered a switching point, local convergence point, network access point, subscriber premise, or something else, fiber optic equipment is used to house components that carry out one or more of the tasks. The fiber optic equipment may be assemblies that include connectors, switches, splitters, splices, or the like. The term "fiber optic assembly" will be used in this disclosure to generically refer to such equipment (or at least portions thereof). In some instances, such equipment is located at a switching point 12 in an FTTx network, although this disclosure is not limited to any particular intended use. Further, although an FTTx network 10 is shown in FIG. 1, the same considerations apply with respect to other types of telecommunication networks or environments, such as data centers and other enterprise network environments.

With increasing needs for higher bandwidth in telecommunication or industrial applications, the number of optical inputs and outputs (I/O) rises drastically. A high I/O count has a resulting increase in optical fiber count inside opto-electronical devices, such as switching points 12. Organization and management of single fibers up to high-density optical cable bundles becomes increasingly necessary as the optical fiber count increases. Fiber routing may be applied to ensure traceable, serviceable, and organized fiber management from optical input to the electronic device observing minimum bend radii. Cable overlength/surplus management may also be utilized because individual I/O routing trace lengths vary from position to position and cable lengths may be mismatched. Managing high fiber count bundles, for example 92 fibers or 144 fibers, introduces additional challenges because the required fiber bending force is higher compared to individual fibers. Furthermore, optical fibers and ribbons containing fibers have a strong spring back tendency and try to straighten, if possible, which makes a loose fiber routing difficult.

In current data-center switches (e.g., switches with 12.8 Tbps bandwidth), external fiber-optic connections are generally terminated in pluggable transceivers at a faceplate of the housing. Optical fiber is not generally present within the switch housing where signals are transported electrically via, e.g., copper traces on printed circuit boards. With increasing data rates, these electrical connections are becoming more lossy and progressively distort the transmitted signals. Overcoming electrical loss requires electrical power which is projected to strongly increase for the coming generations of higher-bandwidth switches due to higher data rates and higher numbers of data channels. Such an increase of power consumption poses several problems regarding operational cost, electric power infrastructure, and waste heat management. Going forward, to reduce power consumption, the industry is moving toward placement of the transceivers inside the switch housing very close to where the signals are generated: the switch application-specific integrated circuit (ASIC). This effectively replaces long runs of electrical connections with optical-fiber connections, which are virtually loss free for the lengths described herein, thus reducing the required signal power. Replacement of the electrical connections with fiber optic connections may necessitate routing of optical fibers within the switch housing. The fiber count can be very high (hundreds to thousands of fibers), and the available space may be very limited driven by many coexisting non-fiber switch components as well as expectations for compact housing sizes. Therefore, the fiber density is expected to be very high within the switch housing.

Details of the fiber routing will strongly impact the ease of assembly and serviceability in case of failure of individual switch components. In particular, a crossing-free layout of fiber runs which connect the different transceivers to the faceplate would make the replacement of an individual transceiver with permanently attached fibers far easier as all other fiber runs could remain untouched. Such an orderly routing of many fibers requires a tight control of fiber-cable lengths which may be costly to achieve given the length variation in manufacturing.

The constraint placed on the cable assembly lengths will have a direct effect on the number of assembly crossovers and will thus affect the ability for an assembly technician to efficiently arrange the cable assemblies and rework/replace defective assemblies. An idealized cable routing scheme would have a multitude of cable assembly lengths that are tailored to a specific route within the switch. Tailoring the length for each cable path results in no cable crossovers and thus will facilitate easier assembly of the switch. This tailored arrangement also allows for easier removal and replacement of "faulty" assemblies that are detected during production quality testing of the switch. However, the ability to create these specific lengths is challenging in current optical fiber cable assembly manufacturing. Some of the manufacturing challenges include management of the groups of cable assembly lengths thus resulting in stock keeping unit (SKU) proliferation; length variation within groups of cable assembly lengths resulting in crossovers; and rework of cable assemblies, which may result in a reduction in the length of the cable assembly. Significant scrap costs would result without the appropriate management of target lengths for reworked product.

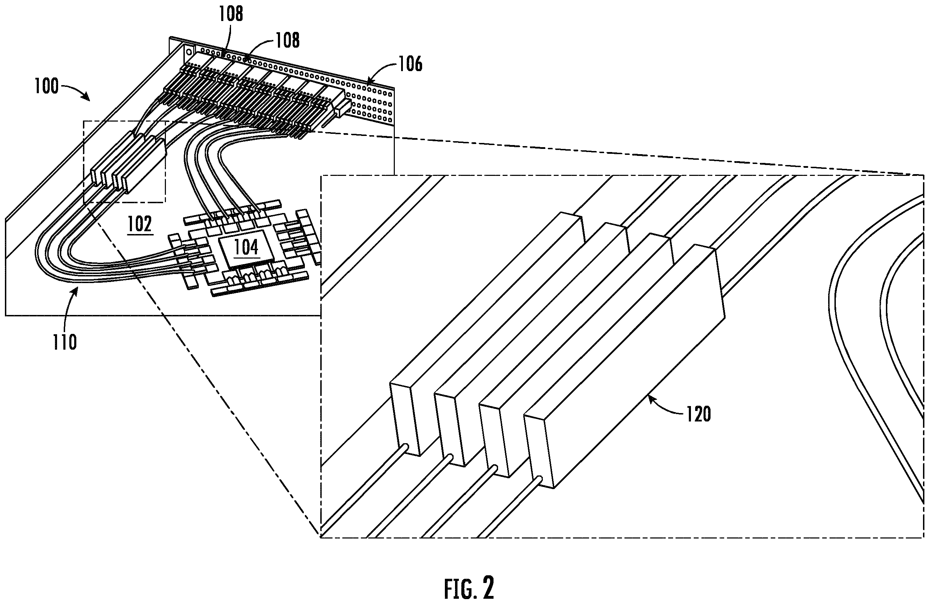

FIG. 2 illustrates an example fiber optic assembly, here a switch housing 100. The switch housing includes a housing base 102 supporting an opto-electronic device 104, e.g. an ASIC. The switch housing 100 includes an adapter panel 106 configured to receive one or more fiber optic adapters 108. The fiber optic adapters 108 may be configured to receive a connector such as multi-fiber push-on / pull-off (MPO) connectors (e.g., according to IEC 61754-7).

At least one cable 110, also referred to as a "cable assembly," may be provided for optically connecting the one or more fiber optic adapters 108 to the opto-electronic device 104. Given the orientation of the opto-electronic device 104 to the adapter panel 106, there are two primary paths for the fiber optic cables 110 on each side of the switch housing 100 when using a symmetrical cable routing scheme. One of the primary paths will be the group of fiber optic cables 110 originating at the adapter panel 106 and terminating at the far side of the opto-electronic device 104. The other primary path will be the group of fiber optic cables 110 that originate at the adapter panel 106 and terminate at the near side of the opto-electronic device 104.

In an example embodiment a cable accumulator or manager 120 may be provided, as disclosed herein to 1) ensure proper cable routing within the switch housing 100, 2) ensure the ability to gain access to individual cable assemblies within the switch housing 100; 3) minimize cable assembly SKUs to maximize cable assembly manufacturing efficiency, and/or 4) reduce the failure probability due to bend stress in the cable assembly.

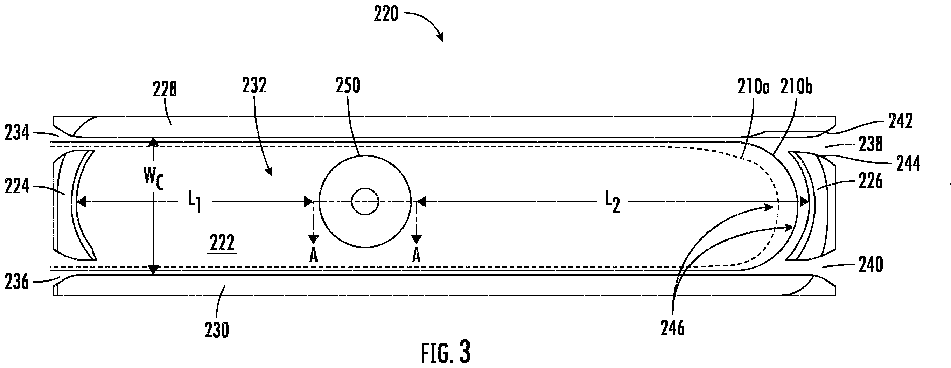

Referring now to FIG. 3, a fiber optic cable accumulator 220 is illustrated according to one or more embodiments described herein. The fiber optic cable accumulator 220 may generally include a base 222, a plurality of walls, such as walls 224, 226, 228, and 230, for example, which together define a perimeter wall extending from the base 222, a cavity 232 defined within the perimeter wall, a plurality of openings, such as openings 234, 236, 238, and 240. For example, providing ingress and egress pathways or channels into the cavity 232, and at least one mandrel 250 extending from the base 222 within the cavity 232. In some embodiments, at least one of the base 222, the plurality of walls 224, 226, 228, 230, the plurality of openings 234, 236, 238, 240, and the at least one mandrel 250 are generally configured to at least partially retain one or more fiber optic cables 210a, 210b within the cavity 232. The cavity 232 generally has a constant width along the length of the fiber optic cable accumulator 220. In some embodiments, the cavity 232 has a width "Wc" of at least about 25 mm. However other widths are contemplated and possible depending on space requirements of a particular application.

The plurality of walls defining the perimeter wall may include a first laterally extending (e.g., along the width, Wc, of the base 222) wall 224 disposed on one end of the base 222 and a second laterally extending wall 226 disposed on an opposite end of the base 222. In some embodiments, the first and second laterally extending walls 224, 226 may be concavely curved on the side that faces the cavity 232 to support or facilitate the maintaining of a loop of slack 246 in the one or more fiber optic cables 210a, 210b. The plurality of walls defining the perimeter wall may further include a first longitudinally extending (e.g., along a length of the base 222, such as perpendicular to the width, Wc) wall 228 disposed on one side of the base 222, and a second longitudinally extending wall 230 disposed on an opposite side of the base 222. A first opening 234 of the plurality of openings may be disposed between the first laterally extending wall 224 and the first longitudinally extending wall 228. A second opening 236 of the plurality of openings may be disposed between the first laterally extending wall 224 and the second longitudinally extending wall 230. A third opening 238 of the plurality of openings may be disposed between the second laterally extending wall 226 and the first longitudinally extending wall 228. A fourth opening 240 of the plurality of openings may be disposed between the second laterally extending wall 226 and the second longitudinally extending wall 230. It is noted while four openings and four walls are depicted, other combinations are contemplated and possible. However, by providing a generally symmetrical design (particularly with respect to the walls and openings), as will be described in greater detail herein, accumulators as provided may be arranged without significant special restrictions for routing, as opposed to non-symmetrical accumulators.

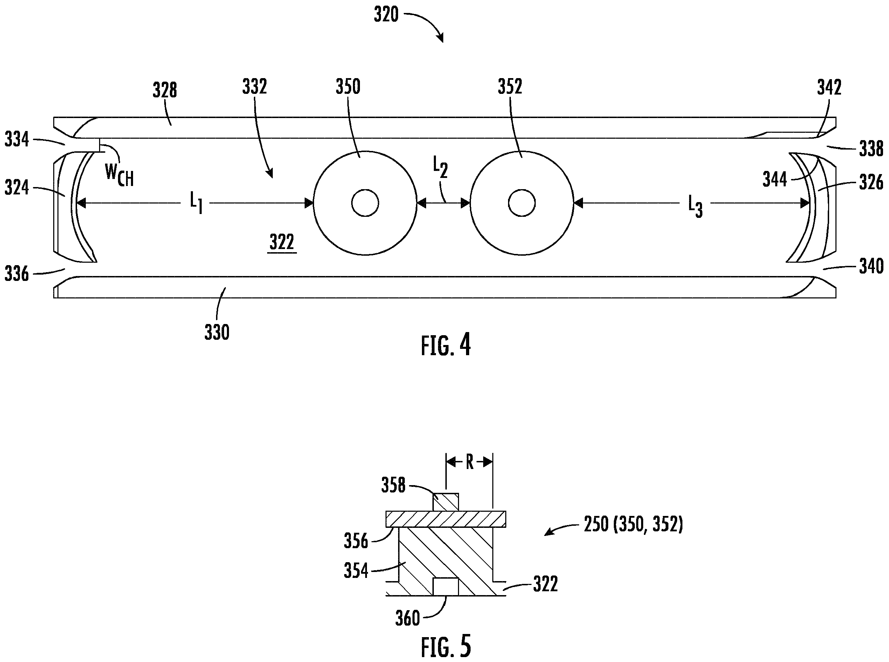

The plurality of openings 234, 236, 238, 240 each define a channel between the respective laterally and longitudinally extending walls which provides access to the cavity 232. In some embodiments, the channels defined by each opening of the plurality of openings 234, 236, 238, 240 have an equal width "W_{CH}" (FIG. 4). In some embodiments, the width W_{CH} is about 2.5 mm, though other sizes are contemplated and possible. Depending on the desired configuration, the one or more fiber optic cables 210a, 210b can be routed into or out of the cavity 232 via the channels defined by the plurality of openings 234, 236, 238, 240.

Moreover, each side of the plurality of openings 234, 236, 238, 240 may include a shape defined by one or more surface features 242, 244. The surface features 242, 244 may be formed adjacent to the plurality of openings 234, 236, 238, 240 on the respective ends of the laterally extending walls 224, 226 and the longitudinally extending walls 228, 230. The surface features 242, 244 may be generally configured to enable or support bending of the one or more fiber optic cables 210a, 210b to about or greater than a predetermined minimum bend radius. Stated another way, the surface features 242, 244 may prevent bending of the one or more fiber optic cables 210a, 210b to a bend radius of less than a predetermined minimum bend radius. Thus, in some embodiments, the surface features 242, 244 is an external fillet having a radius of curvature of at least about 10 mm, for example, though other radii are contemplated and possible. In this regard, when the one or more fiber optic cables 210a, 210b are routed out of the cavity 232 such that a bend (not shown) may be present at one or more of the plurality of openings 234, 236, 238, 240, the surface features 242, 244 (e.g., external fillet) may prevent the bend from having a radius smaller than the radius of curvature of the external fillet (e.g., 10 mm). The plurality of openings 234, 236, 238, 240 can also be described as having a funnel shape.

With reference to FIGS. 3 and 5, a cross-section of the mandrel 250 taken along line A-A in FIG. 3 is illustrated in FIG. 5. As illustrated, the mandrel 250 may generally include a cylindrical body 354 with an upper portion defined by a lip 356 which overhangs the cylindrical body 354. The lip 356 is generally configured to retain the one or more fiber optic cables 210a, 210b when the one or more fiber optic cables 210a, 210b are bent or wrapped around the mandrel 250, as discussed in further detail below. Moreover, the plurality of walls 224, 226, 228, 230 may include a similarly formed lip (not shown) on an upper portion thereof that overhangs the cavity 232. The lip may extend along one or more parts of the plurality of walls 224, 226, 228, 230 or may extend along the entire length thereof. A protrusion 358 may be disposed, such as centrally disposed on top of the lip 356 which is configured to facilitate vertical stacking of the fiber optic cable accumulator 220, as discussed in further detail below. For example, as depicted a mating recess 360 may be formed on an underside of the base 322 to receive a protrusion 358 from another accumulator. Such mating may facilitate stacking of accumulators and prevent side-to-side movement of accumulators relative to one another when stacked.

In some embodiments, the cylindrical body 354 of the mandrel 250 has a radius of at least about 10 mm (as measured from the center of cylindrical body 354 to an outer edge thereof), though other radii are contemplated and possible. The cylindrical body 354 of the mandrel 250 is generally configured to facilitate or enable bending of the one or more fiber optic cables 210a, 210b to at or greater than a predetermined minimum bend radius. In this regard, when the one or more fiber optic cables 210a, 210b may be bent about the cylindrical body 354, the cylindrical body 354 may prevent the bend from having a radius smaller than the radius of the cylindrical body 354 (e.g., 10 mm, for example). Stated another way, the cylindrical body 354 may prevent bending of the one or more fiber optic cables 210a, 210b to a bend radius of less than a predetermined minimum bend radius

The mandrel 250 is generally disposed equidistant from at least two opposite portions of the perimeter wall. As illustrated in FIG. 3, the mandrel 250 is disposed equidistant between the first and second longitudinally extending walls 228, 230. In some embodiments, the distance between the mandrel 250 and the first and second longitudinally extending walls 228, 230 is equal to the width W_{CH} of the channels defined by the plurality of openings 234, 236, 238, 240. Thus, in some embodiments, the distance between the mandrel 250 and the first and second longitudinally extending walls 228, 230 is about 2.5 mm.

In the embodiment illustrated in FIG. 3, the mandrel 250 may be disposed a first distance ("L₁") away from the first laterally extending wall 224 and a second distance ("L₂") away from the second laterally extending wall 226. In some embodiments, the second distance L₂ is greater than the first distance L₁. In some embodiments, the second distance L₂ is about 80 mm, though other lengths are contemplated and possible. The portion of the cavity 232 between the mandrel 250 and the second laterally extending wall 226 having the length L₂ may define a slack storage area, such as when used in conjunction with a loop-back configuration, described in more detail below. In this regard, the one or more fiber optic cables 210a, 210b can be routed between the mandrel 250 and the second laterally extending wall 226 to form a loop of slack 246 in the slack storage area. However, in embodiments, the portion of the cavity 232 between the mandrel 250 and the first laterally extending wall 224 having the length L₁ may define an additional or alternative slack storage area depending on the routing of the one or more fiber optic cables 210a, 210b.

In the loop-back configuration, the one or more fiber optic cables 210a, 210b may enter the cavity 232 from one of the first or second openings 234, 236. The one or more fiber optic cables 210a, 210b then extend along one of the first or second longitudinally extending walls 228, 230. The one or more fiber optic cables 210a, 210b then "loop back" adjacent to the second laterally extending wall 226. The one or more fiber optic cables 210a, 210b then extend along the other of the first or second longitudinally extending walls 228, 230 and exit the other of the first or second openings 234, 236. In this loop-back configuration, the location of the mandrel 250 relative to the second laterally extending wall 226 permits up to 2 × L of slack storage for each fiber optic cable 210a, 210b. Thus, in embodiments where the second distance L is about 80 mm, up to about 160 mm of slack can be stored for each fiber optic cable 210a, 210b. It is noted that were the fiber optic cables 210a, 210a pulled taught, the mandrel 250 would prevent fiber optic cables 210a, 210b from being pulled against the first laterally extending wall 224, which might otherwise introduce bending sufficient to cause breakage to the fiber optic cables 210a, 201b.

Other mandrel and slack storage configurations are contemplated in other embodiments of the disclosure. For example, with reference to FIGS. 4 and 6-8, a fiber optic cable accumulator 320. The fiber optic accumulator 320 includes many of the same features as described above with respect to accumulator 220, such that such details with respect to such features will not be repeated for brevity but are applicable to the present embodiment. In particular, the fiber optic cable accumulator 320 may generally include a base 322, a plurality of walls, for examples, first and second laterally extending walls 324, 326 and first and second longitudinally extending walls 328, 330, which together define a perimeter wall extending from the base 322, a cavity 332 defined within the perimeter wall and a plurality of openings 334, 336, 338, 340 providing ingress and egress pathways or channels into the cavity 332. Moreover, one or more surface features 342, 344 are formed on each of the laterally extending walls 324, 326 and each of longitudinally extending walls 328, 330. However, the present embodiment includes at least two mandrels 350, 352 extending from the base 322 within the cavity 332. In some embodiments, at least one of the base 322, the plurality of walls 324, 326, 328, 330, the plurality of openings 334, 336, 338, 340, and the at least two mandrels 350, 352 are generally configured to at least partially retain one or more fiber optic cables 310a, 310b, 310c, 310d within the cavity 332. The cavity 332 generally has a constant width along the length of the fiber optic cable accumulator 320. In some embodiments, the cavity 332 has a width "Wc" of at least about 25 mm.

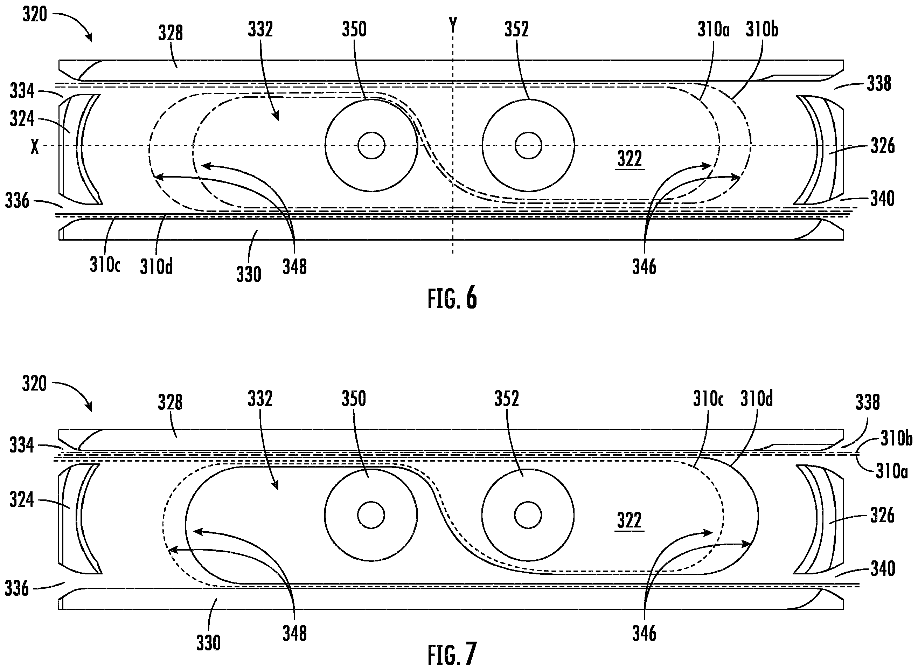

It is noted that the fiber optic accumulator 320 is generally configured to have a symmetric design about the X-axis centerline and the Y-axis centerline illustrated in FIG. 6. In this regard, the first and second laterally extending walls 324, 326 are generally centered on the X-axis centerline and extend perpendicularly thereto (e.g., parallel to the Y-axis centerline). Moreover, the first and second laterally extending walls 324, 326 are generally spaced an equal distance from the Y-axis centerline. The first and second longitudinally extending walls 328, 330 are generally centered on the Y-axis centerline and extend perpendicularly thereto (e.g., parallel to the X-axis centerline). Moreover, the first and second longitudinally extending walls 328, 330 are generally spaced an equal distance from the X-axis centerline. The first and second mandrels 350, 352 are generally centered on the X-axis centerline and are spaced an equal distance from the Y-axis centerline. It is noted that the fiber optic accumulator 220 described above and shown in FIG. 3 has a similar symmetric design with respect to the laterally extending walls 224, 226 and longitudinally extending walls 228, 230. However, the single mandrel 250 of accumulator 220, while centered on the X-axis centerline, may be offset from the Y-axis centerline.

With reference also to FIG. 5, the at least two mandrels 350, 352 may each be substantially identical to the cross-section depicted of the at least one mandrel 250. In particular, the at least two mandrels 350, 352 each may generally include a cylindrical body 354 with an upper portion defined by a lip 356 which overhangs the cylindrical body 354. The lip 356 may be generally configured to retain the one or more fiber optic cables 310a, 310b, 310c, 310d, depicted in FIG. 6, when the one or more fiber optic cables 310a, 310b, 310c, 310d are bent or wrapped around the mandrels 350, 352, as discussed in further detail below. A protrusion 358 may be disposed, such as centrally disposed on top of the lip 356 which is configured to facilitate vertical stacking of the fiber optic cable accumulator 320, as discussed in further detail below. As in the embodiment above, beneath each of the mandrels 350, formed within the base may be a mating recess 360 as described above.

The at least two mandrels 350, 352 may be generally disposed equidistant from at least two opposite portions of the perimeter wall. As illustrated in FIGS. 4 and 6-8, the at least two mandrels 350, 352 are disposed equidistant between the first and second longitudinally extending walls 328, 330. In some embodiments, the distance between the at least two mandrels 350, 352 and the first and second longitudinally extending walls 328, 330, respectively, is equal to, greater than, or less than, the width W_{CH} of the channels defined by the plurality of openings 334, 336, 338, 340. In some embodiments, the distance between the at least two mandrels 350, 352, e.g., an edge of the lip 356, and the first and second longitudinally extending walls 328, 330 may be about 2.5 mm, though other distances are contemplated and possible.

In the embodiment illustrated in FIG. 4, the first mandrel 350 is disposed a distance ("L₁") away from the first laterally extending wall 324, the second mandrel 352 is disposed a distance ("L₃") away from the second laterally extending wall 326, and the first and second mandrels 350, 352 are spaced a distance ("L₂") apart from each other. In some embodiments, distances L₁ and L₃ are equal. In some embodiments, distances L₁ and L₃ are each about 50 mm, though other distances are contemplated and possible. In some embodiments, the distance L₂ between the first and second mandrels 350, 352 is about 10 mm, though other distances are contemplated and possible. The portion of the cavity 332 between the first mandrel 350 and the first laterally extending wall 324 having the length L₁ defines a first slack storage area. Similarly, the portion of the cavity 332 between the second mandrel 352 and the second laterally extending wall 326 having the length L₃ defines a second slack storage area. In this regard, with reference to FIGS. 6-8, the one or more fiber optic cables 310a, 310b, 310c, 310d can be routed between the first and second mandrels 350, 352 and the first laterally extending wall 324 to form a loop of slack 348 in the first slack storage area. In addition, or alternatively, the one or more fiber optic cables 310a, 310b, 310c, 310d can be routed between the first and second mandrel 350, 352 and the second laterally extending wall 326 to form a loop of slack 346 in the second slack storage area.

In one example, as illustrated in FIG. 6, the fiber optic cables 310a, 310b, 310c, 310d enter the cavity 332 from the fourth opening 340. Two of the fiber optic cables (i.e., 310c and 310d) extend along the second longitudinally extending wall 330 and exit or pass through via the second opening 336. The other two fiber optic cables (i.e., 310a and 310b) extend along the second longitudinally extending wall 330 then "loop back" at loop 348 adjacent to the first laterally extending wall 324. Fiber optic cables 310a, 310b then partially extend along the first longitudinally extending wall 328 until reaching the first mandrel 350. The fiber optic cables 310a, 310b are then routed between the first and second mandrels 350, 352 and thereafter partially extend along the second longitudinally extending wall 330. The fiber optic cables 310a, 310b then "loop back" at the loop of slack 346 adjacent to the second laterally extending wall 326 and subsequently extend along the first longitudinally extending wall 328 until exiting or passing through the first opening 334, thereby forming an "s" bend in the fiber optic cables 310a, 310b. In this double loop back configuration, the first slack storage area between the first mandrel 350 and the first laterally extending wall 324 permits up to 2 × L₁ of slack storage for each fiber optic cable 310a, 310b, and the second slack storage area between the second mandrel 352 and the second laterally extending wall 326 permits up to 2 × L₃ of additional slack storage for each fiber optic cable 310a, 310b. In total, the first and second slack storage areas permit up to 2 (Li + L₃) of slack storage for each fiber optic cable 310a, 310b. Thus, in embodiments where L₁ and L₃ are each about 50 mm, up to about 200 mm of slack storage for each fiber optic cable 310a, 310b can be stored.

As another example, as illustrated in FIG. 7, two of the fiber optic cables 310a, 310b enter the cavity 332 from the third opening 338, while the other two fiber optic cables 310c, 310d enter the cavity 332 from the fourth opening 340. Fiber optic cables 310a, 310b extend along the first longitudinally extending wall 328 and exit or pass through via the first opening 334. Fiber optic cables 310c, 310d extend along the second longitudinally extending wall 330 then "loop back" at loop 348 adjacent to the first laterally extending wall 324. Fiber optic cables 310c, 310d then partially extend along the first longitudinally extending wall 328 until reaching the first mandrel 350. The fiber optic cables 310c, 310d are then routed between the first and second mandrels 350, 352 and thereafter partially extend along the second longitudinally extending wall 330. The fiber optic cables 310c, 310d then "loop back" at loop 346 adjacent to the second laterally extending wall 326 and subsequently extend along the first longitudinally extending wall 328 until exiting or passing through the first opening 334, thereby forming an "s" bend in the fiber optic cables 310c, 310d. In this double loop back configuration, the first slack storage area between the first mandrel 350 and the first laterally extending wall 324 permits up to 2 × L₁ of slack storage for each fiber optic cable 310c, 310d, and the second slack storage area between the second mandrel 352 and the second laterally extending wall 326 permits up to 2 × L₃ of additional slack storage for each fiber optic cable 310c, 310d. In total, the first and second slack storage areas permit up to 2 (Li + L₃) of slack storage for each fiber optic cable 310c, 310d. Thus, in embodiments where L₁ and L₃ are each about 50 mm, up to about 200 mm of slack storage for each fiber optic cable 310c, 310d can be stored.

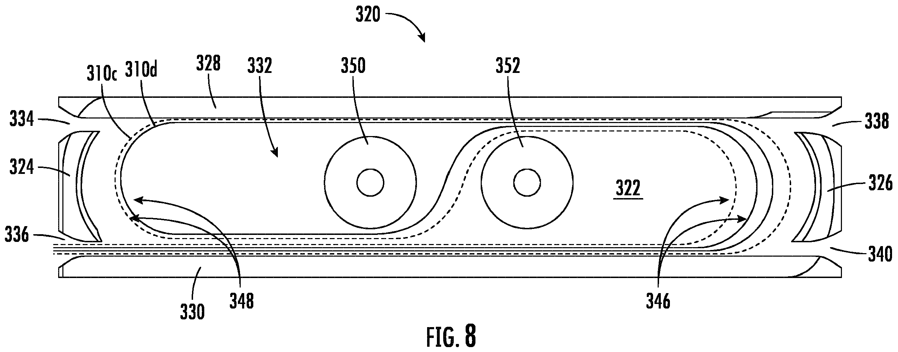

As another example, as illustrated in FIG. 8, two fiber optic cables 310c, 310d enter the cavity 332 from the second opening 336 and also exit the cavity from the second opening 336. Fiber optic cables 3 10c, 310d initially extend along the second longitudinally extending wall 330 then "loop back" at loop 346 adjacent to the second laterally extending wall 326. Fiber optic cables 310c, 310d then extend along the first longitudinally extending wall 328 and "loop back" at loop 348 adjacent to the first laterally extending wall 324. Fiber optic cables 310c, 310d then partially extend along the second longitudinally extending wall 330 until reaching the first mandrel 350. The fiber optic cables 310c, 310d are then routed between the first and second mandrels 350, 352 and thereafter partially extend along the first longitudinally extending wall 328. The fiber optic cables 310c, 310d then "loop back" again at loop 346 adjacent to the second laterally extending wall 326 a second time and subsequently extend along the second longitudinally extending wall 330 until exiting or passing through the second opening 336, thereby forming an "s" bend in the fiber optic cables 310c, 310d. In this configuration, the first slack storage area between the first mandrel 350 and the first laterally extending wall 324 permits up to 2 × L₁ of slack storage for each fiber optic cable 310c, 310d. The second slack storage area between the second mandrel 352 and the second laterally extending wall 326 permits up to 4 × L₃ of slack storage for each fiber optic cable 310c, 310d. In total, the first and second slack storage areas permit up to 2 (Li + 2L₃). Thus, in embodiments where L₁ and L₃ are each about 50 mm, up to about 300 mm of slack storage for fiber optic cables 310c, 310d can be stored.

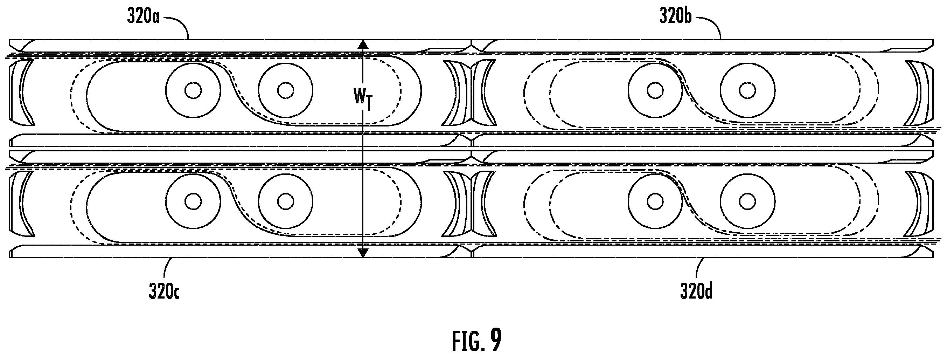

Referring now to FIG. 9, a plurality of fiber optic cable accumulators 320a-320d are illustrated in a side-by-side configuration to accommodate various lengths of slack of the one or more fiber optic cables. Each fiber optic cable accumulator 320a-320d is configured and operates in a substantially similar manner as the fiber optic cable accumulator 320 discussed above and with reference to FIGS. 4 and 6-8. That is each fiber optic cable accumulator 320a-320d may be substantially identical to the others. When placed in a side-by-side configuration, the plurality of fiber optic cable accumulators 320a-320d permit the one or more fiber optic cables to pass through or exit an opening of one fiber optic cable accumulator and enter through an opening of an adjacent fiber optic accumulator or the one or more fiber optic cables can be routed through the mandrels to create "loop back" configurations as discussed above and shown in FIGS. 6-7. The symmetric design of the plurality of fiber optic cable accumulators 320a-320d permits for a reduction in the number of product variants (SKUs) while enabling both ends of each fiber optic cable to be adjusted independently. Moreover, when in the side-by-side configuration shown in FIG. 9, the plurality of fiber optic cable accumulators 320a-320d have a total width ("W_{T}") to accommodate the use of the mandrels as described herein. In some embodiments, the total width W_{T} is about 60 mm, depending on the size of the accumulators. Additional configurations of the plurality of cable accumulators 320a-320d are contemplated. Moreover, the number of cable accumulators shown and described herein is not to be construed as limiting, as fewer or additional may be used.

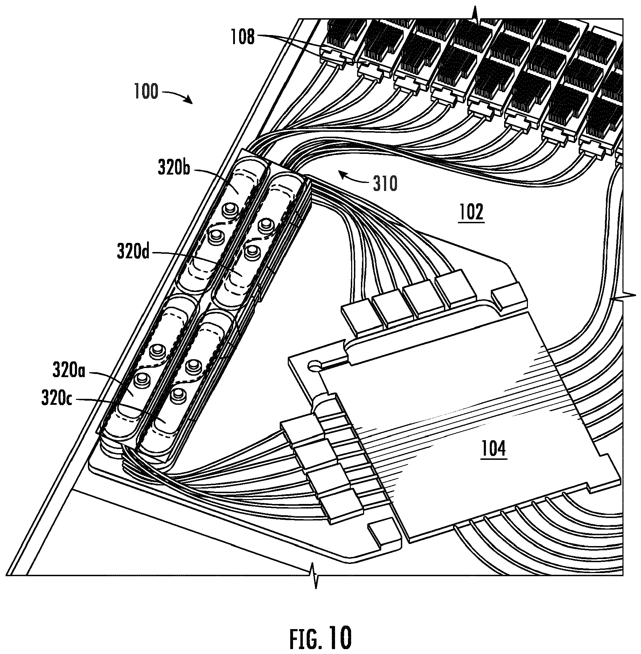

Referring now to FIG. 10, the plurality of fiber optic cable accumulators 320a-320d are illustrated in one or more vertical stacks supported on a housing base 102 of a switch housing 100. The housing base 102 further supports an opto-electronic device 104, e.g., an ASIC, and one or more fiber optic adapters 108. At least one fiber optic cable 310, or fiber optic cable assembly 310, is provided optically connecting the one or more fiber optic adapters 108 to the opto-electronic device 104. Vertical stacking of the plurality of fiber optic cable accumulators 320a-320d is at least partially enabled by the protrusions (e.g., protrusion 358 in FIG. 5) which may be disposed on top of the lip (e.g., lip 356 in FIG. 5). In this regard, upon the stacking of one fiber optic cable accumulator with another, a corresponding mating recess (e.g., recess 360 in FIG. 5) may be formed on an underside of the base to receive a protrusion from another accumulator. The plurality of fiber optic cable accumulators 320a-320d in the one or more vertical stacks of FIG. 10 are provided to 1) ensure proper fiber optic cable routing within the switch, 2) ensure the ability to gain access to individual fiber optic cable assemblies within the switch; 3) minimize fiber optic cable assembly SKUs to maximize fiber optic cable assembly manufacturing efficiency, and/or 4) reduce the failure probability due to bend stress in the cable assembly.

In example embodiments described above, fiber optic cables are routed through the various accumulators. The fiber optic cables may take on a plurality of forms, which may inform a minimum bend radius the cable may experience without failure. For example, fiber optic cables may include a rollable ribbon or intermittently bonded ribbon disposed within a cable jacket. Ribbon(s) may be conventionally coated, substantially coated, or continuously coated. Moreover, the one or more fiber optic cables or cable assemblies 110, 210, 310 may include a single fiber, a 12-fiber ribbon, 32x12 fiber ribbons, 96x12 fiber ribbons, etc. As noted above, it is desirable to maintain a minimum bend radius in such ribbons so as to permit low failure rate probabilities.

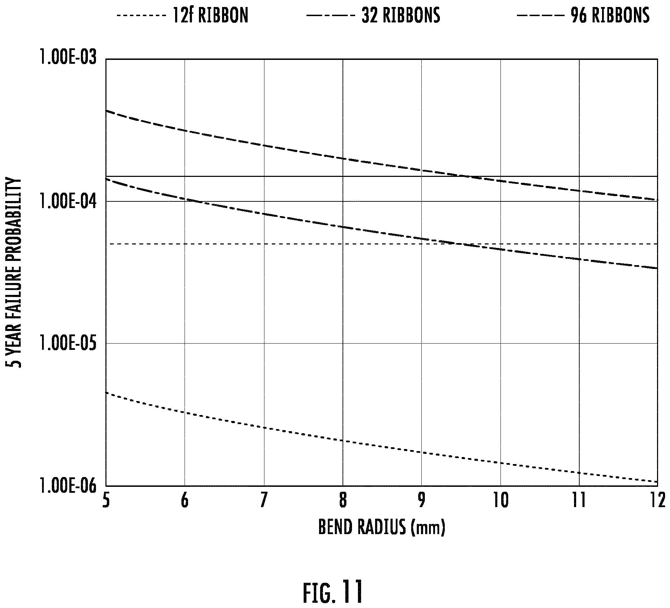

With reference to FIG. 11, a plot of predicted failure probabilities is shown as a function of the mandrel radius (i.e., bend radius) for a single 12-fiber ribbon, 32x12 fiber ribbons, and 96-12 fiber ribbons. The model assumes that the fiber ribbons are routed with a first 180 degree arc at the mandrel radius R and a second 180 degree arc at a radius that is equal to half the width of the channel, Wc/2, where Wc/2 = R + 2.5 mm. The solid black horizontal line corresponds to a failure rate of about 1.5×10⁻⁴ and the dashed horizontal line corresponds to a failure rate of about 5×10⁻⁵. In this regard, certain applications may accept a higher failure probability rate (i.e., 1.5×10⁻⁴) and other applications may accept a lower failure probability rate (i.e., 5×10⁻⁵) The plot in FIG. 11 thus indicates that a minimum bend radius of at least about 10 mm should correspond to a failure rate less than 1.5×10⁻⁴ for a device with 96x12 fiber ribbons and less than 5×10⁻⁵ for a device with 32x12 fiber ribbons. Thus, in the example embodiments described above where the mandrels may have a radius of at least about 10 mm (as measured from the center of cylindrical body 354 to an outer edge thereof), the failure probability due to bend stress is reduced to below 1.5×10⁻⁴ for the 96x12 fiber ribbon application and below 5×10⁻⁵ for the 32x12 fiber ribbon application.

In the example embodiments described above, the fiber optic cable accumulators or managers 120, 220, and 320 can be manufactured using a 3D printing process with an ABS-type resin, for example. Such resins are commonly used and are compatible with many 3D printing platforms. However ABS-type resins may not have low enough surface and volume resistivities to be classified as static dissipative. Given that the example fiber optic cable accumulators described herein will be deployed adjacent to sensitive electronic components, there is a risk of static electricity build-up when the fiber optic cables are slid into and out of the accumulators during assembly or servicing. For this reason, it may be desirable for the accumulators to be formed from a static dissipative plastic (or other material) which allows the charges to flow to ground more slowly and in a more controlled manner, thereby preventing discharge to or from human contact. Such plastics (or other materials) should have a surface resistance between 1 × 10⁵ ohms/square and 1 × 10¹² ohms/square and allow electrical charges to dissipate generally within milliseconds. Additional characteristics that are desirable in the accumulators described herein are high Young's and flexural moduli (e.g., >1.5 GPa), a low coefficient of friction (e.g., <0.4) and a high heat deflection temperature (e.g., >80°C). One example material which may have the aforementioned characteristics is the ESD resin product commercially available from Formlabs Inc. Another example material which may have the aforementioned characteristics is the Tough 2000 product commercially available from Formlabs Inc.

From the above, it is to be appreciated that defined herein is a high-reliability fiber optic cable accumulator that generally simplifies the challenge of routing fiber optic cables or ribbons through a complex block of accumulators of different SKUs that need to be assembled like a jigsaw puzzle. Such fiber optic cable accumulators, such as accumulator 320 for example, may include a symmetric design that equalizes slack storage from ingress and egress directions.

Further aspects of the embodiments described herein are provided by the subject matter of the following clauses:
Clause 1. A fiber optic cable accumulator including: a base; a perimeter wall extending from the base and defining: a cavity; and a plurality of openings providing ingress and egress pathways into the cavity; and at least one mandrel extending from the base within the cavity and disposed equidistant from at least two opposite portions of the perimeter wall.
Clause 2. The fiber optic cable accumulator of clause 1, wherein the perimeter wall is comprised of a first laterally extending wall disposed at one end of the base and a second laterally extending wall disposed at an opposite end of the base.
Clause 3. The fiber optic cable accumulator of clause 2, wherein the at least one mandrel comprises a single mandrel disposed a first distance away from the first laterally extending wall and a second distance away from the second laterally extending wall, wherein the second distance is greater than the first distance.
Clause 4. The fiber optic cable accumulator of clause 3, wherein the second distance is about 80 mm.
Clause 5. The fiber optic cable accumulator of clause 2, wherein the at least one mandrel comprises a first mandrel and a second mandrel, wherein the first mandrel and the second mandrel are disposed equidistant from the first and second laterally extending walls.
Clause 6. The fiber optic cable accumulator of clause 5, wherein the first mandrel is disposed about 50 mm from the first laterally extending wall and the second mandrel is disposed about 50 mm from the second laterally extending wall.
Clause 7. The fiber optic cable accumulator of clause 5 or 6, wherein the first mandrel is spaced at a distance of about 10 mm from the second mandrel.
Clause 8. The fiber optic cable accumulator of any of clauses 1-7, wherein an external fillet is defined on each side of the plurality of openings.
Clause 9. The fiber optic cable accumulator of clause 8, wherein the external fillet has a radius of at least about 10 mm.
Clause 10. The fiber optic cable accumulator of any of clauses 1-9, wherein the at least one mandrel comprises a cylindrical body with an upper portion defined by a lip that overhangs the cylindrical body.
Clause 11. The fiber optic cable accumulator of clause 10, wherein the cylindrical body of the at least one mandrel has a radius of at least about 10 mm.
Clause 12. The fiber optic cable accumulator of any of clauses 1-11, wherein the fiber optic cable accumulator is formed from a static dissipative material having a surface resistance of between about 1×10⁵ ohms/square and 1×10¹² ohms/square.
Clause 13. The fiber optic cable accumulator of any of clauses 1-12, wherein the cavity has a width of at least about 25 mm.
Clause 14. A fiber optic assembly including: a housing base; an opto-electronic device supported by the housing base; one or more fiber optic adapters supported by the housing base; at least one optical fiber optically connecting the one or more fiber optic adapters to the opto-electronic device; and at least one fiber optic cable accumulator supported by the housing base, the at least one fiber optic cable accumulator configured to route at least a portion of the at least one optical fiber from the one or more fiber optic adapters to the opto-electronic device, the at least one fiber optic cable accumulator comprising: a base; a perimeter wall extending from the base and defining: a cavity; and a plurality of openings providing ingress and egress pathways into the cavity; and at least one mandrel extending from the base within the cavity and disposed equidistant from at least two opposite portions of the perimeter wall.
Clause 15. The fiber optic assembly of clause 14, wherein the at least one mandrel of the at least one fiber optic cable accumulator is configured to limit bending of the at least one optical fiber to a predetermined bend radius of at least about 10 mm.
Clause 16. The fiber optic assembly of any of clauses 14-15, wherein the plurality of openings of the at least one fiber optic cable accumulator are configured to limit bending of the at least one optical fiber to a predetermined bend radius of at least about 10 mm.
Clause 17. The fiber optic assembly of any of clauses 14-16, wherein the at least one fiber optic cable accumulator comprises a plurality of fiber optic accumulators disposed in one or more vertical stacks.
Clause 18. A fiber optic cable accumulator including: a base; a perimeter wall extending from the base and defining: a cavity; and a plurality of openings providing ingress and egress pathways into the cavity; and at least one mandrel extending from the base within the cavity and disposed equidistant from at least two opposite portions of the perimeter wall; and at least one optical fiber at least partially stored within the cavity, the at least one optical fiber configured to optically connect one or more fiber optic adapters to an opto-electronic device.
Clause 19. The fiber optic cable accumulator of clause 18, wherein the at least one fiber optic cable is a 96x12 fiber ribbon and a failure probability due to bend stress in the at least one optical fiber is below 1.5×10⁻⁴.
Clause 20. The fiber optic cable accumulator of clause 18, wherein the at least one fiber optic cable is a 32x12 fiber ribbon and a failure probability due to bend stress in the at least one optical fiber is below 5×10⁻⁵.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A fiber optic cable accumulator comprising:
a base;
a perimeter wall extending from the base and defining:
a cavity; and
a plurality of openings providing ingress and egress pathways into the cavity; and
at least one mandrel extending from the base within the cavity and disposed equidistant from at least two opposite portions of the perimeter wall.

2. The fiber optic cable accumulator of claim 1, wherein the perimeter wall is comprised of a first laterally extending wall disposed at one end of the base and a second laterally extending wall disposed at an opposite end of the base.

3. The fiber optic cable accumulator of claim 2, wherein the at least one mandrel comprises a single mandrel disposed a first distance away from the first laterally extending wall and a second distance away from the second laterally extending wall, wherein the second distance is greater than the first distance.

4. The fiber optic cable accumulator of claim 3, wherein the second distance is about 80 mm.

5. The fiber optic cable accumulator of claim 2, wherein the at least one mandrel comprises a first mandrel and a second mandrel, wherein the first mandrel and the second mandrel are disposed equidistant from the first laterally extending wall and the second laterally extending wall.

6. The fiber optic cable accumulator of claim 5, wherein the first mandrel is disposed about 50 mm from the first laterally extending wall and the second mandrel is disposed about 50 mm from the second laterally extending wall.

7. The fiber optic cable accumulator of claim 5 or 6, wherein the first mandrel is spaced at a distance of about 10 mm from the second mandrel.

8. The fiber optic cable accumulator of any of claims 1-7, wherein an external fillet is defined on each side of the plurality of openings.

9. The fiber optic cable accumulator of claim 8, wherein the external fillet has a radius of at least about 10 mm.

10. The fiber optic cable accumulator of any of claims 1-9, wherein the at least one mandrel comprises a cylindrical body with an upper portion defined by a lip that overhangs the cylindrical body.

11. The fiber optic cable accumulator of claim 10, wherein the cylindrical body of the at least one mandrel has a radius of at least about 10 mm.

12. The fiber optic cable accumulator of any of claims 1-11, wherein the fiber optic cable accumulator is formed from a static dissipative material having a surface resistance of between about 1×10⁵ ohms/square and 1×10¹² ohms/square.

13. The fiber optic cable accumulator of any of claims 1-12, wherein the cavity has a width of at least about 25 mm.
